# EUROPEAN PATENT APPLICATION

(11) **EP 4 811 178 A1**
(43) Date of publication of application: **23.09.2026**
(21) Application number: 24899392.5
(22) Date of filing: 11.09.2024
(51) Int. Cl.: G06F 18/214

(54) **DATA PROCESSING METHOD AND APPARATUS**

(30) Priority: 08.12.2023 CN 202311690834
(71) Applicant: Huawei Technologies Co., Ltd., Shenzhen, Guangdong 518129 (CN)
(72) Inventor: XU, Hua, Shenzhen, Guangdong 518129 (CN); YAO, Huaxin, Shenzhen, Guangdong 518129 (CN); WANG, Guowei, Shenzhen, Guangdong 518129 (CN); BAO, Xiaoming, Shenzhen, Guangdong 518129 (CN); SUN, Hongwei, Shenzhen, Guangdong 518129 (CN)
(74) Representative: Grünecker Patent- und Rechtsanwälte PartG mbB
(86) International application number: PCT/CN2024/118376
(87) International publication number: WO 2025/118746

(57) **Abstract**

A data processing method and an apparatus are provided, relating to the field of computer technologies. After a first gradient value corresponding to a first model parameter is determined based on a loss value of first prediction data and an initial value of the first model parameter of a recommendation model, a first gradient storage address is determined based on a first identifier and a mapping relationship. The first gradient value and an accumulated gradient value that is stored in a first gradient storage unit indicated by the first gradient storage address are accumulated, and an accumulated gradient value obtained through accumulation is stored in the first gradient storage unit. Finally, a parameter value of the first model parameter is adjusted based on an accumulated gradient value stored in the first gradient storage unit. The data processing method provided in this application improves data processing efficiency of training the recommendation model.

## Description

This application claims priority to Chinese Patent Application No. 202311690834.5, filed on December 8, 2023, and entitled "DATA PROCESSING METHOD AND APPARATUS", which is incorporated herein by reference in its entirety.

### TECHNICAL FIELD

This application relates to the field of computer technologies, and in particular, to a data processing method and an apparatus.

### BACKGROUND

A recommendation model is used to filter, from massive data, data content that users are interested in, and recommend the filtered data content to users. The recommendation model can be trained by a server based on sample data. For example, for each piece of sample data in a sample data set, the server extracts a plurality of sample features of the sample data; calculates a gradient value corresponding to a model parameter corresponding to each of the plurality of sample features and a hash value of each sample feature; establishes a mapping relationship between the hash value of each sample feature and a gradient storage address; and stores, based on the mapping relationship in a gradient storage unit indicated by a corresponding gradient storage address, the gradient value corresponding to the model parameter corresponding to each sample feature. The server obtains, based on the mapping relationship, gradient values stored in gradient storage addresses corresponding to hash values of sample features with a same identifier (namely, gradient values stored in gradient storage units indicated by the gradient storage addresses); calculates an average value of the gradient values stored in the gradient storage addresses corresponding to the hash values of the sample features with the same identifier; and adjusts a parameter value of the model parameter of the recommendation model based on the average value.

In the process of establishing the mapping relationship, to avoid hash collisions, for sample features with a same hash value, the server obtains hash values of key codes of the sample features, and establishes the mapping relationship based on the hash values of the key codes of the sample features. When the server obtains the gradient values based on the mapping relationship, the server first determines the gradient storage addresses based on the hash values of the sample features. For the sample features with the same hash value, the server further determines gradient storage addresses based on the hash values of the key codes of the sample features, and then obtains gradient values stored in the determined gradient storage addresses. For the sample features with the same hash value, the server needs to further search the mapping relationship based on the hash values of the key codes to determine the gradient storage addresses, resulting in low data processing efficiency in the process of training the recommendation model.

### SUMMARY

This application provides a data processing method and an apparatus. Technical solutions provided in this application can improve data processing efficiency in a process of training a recommendation model. Technical solutions of this application are described below.

According to a first aspect, a data processing method is provided. The method includes: determining, based on a loss value of first prediction data and an initial value of a first model parameter of a recommendation model, a first gradient value corresponding to the first model parameter, where the first prediction data is calculated by the recommendation model based on a first user feature and a first content feature, an identifier of a first sample feature in the first user feature and the first content feature is a first identifier, and the first model parameter corresponds to the first identifier; determining a first gradient storage address based on the first identifier (namely, the identifier of the first sample feature) and a mapping relationship, where the mapping relationship includes a mapping relationship between the first identifier and the first gradient storage address, the first gradient storage address indicates a first gradient storage unit, and the first gradient storage unit is configured to store an accumulated gradient value corresponding to the first model parameter; obtaining a first accumulated gradient value by accumulating the first gradient value and the accumulated gradient value stored in the first gradient storage unit; storing the first accumulated gradient value in the first gradient storage unit; and adjusting a parameter value of the first model parameter based on an accumulated gradient value (which may be the first accumulated gradient value, or may be an accumulated gradient value obtained by accumulating, based on the first accumulated gradient value, another gradient value corresponding to the first model parameter) stored in the first gradient storage unit.

The mapping relationship may be a mapping relationship between an identifier of a sample feature and a gradient storage address. For ease of description, the identifier of the sample feature is referred to as a feature identifier or a sample feature identifier for short in some descriptions below. The identifier of the first sample feature is the first identifier, and an identifier of another sample feature may also be the first identifier. In other words, identifiers of different sample features may be the same or may be different.

Both the first user feature and the first content feature are sample features of first sample data. The loss value of the first prediction data is a loss of the first prediction data relative to standard prediction data corresponding to the first sample data. The standard prediction data corresponding to the first sample data is a label value (or referred to as labeled data) of the first sample data. The first prediction data is training prediction data corresponding to the first sample data, the first prediction data represents a predicted association degree (namely, a predicted degree of association) between the first user feature and the first content feature, and the standard prediction data corresponding to the first sample data represents a standard association degree (namely, a labeled association degree) between the first user feature and the first content feature. In this application, user features of different sample data may be the same or different, and content features of different sample data may be the same or different.

The accumulated gradient value corresponding to the first model parameter is an accumulated value of gradient values corresponding to the first model parameter. The first gradient storage unit is configured to store the accumulated gradient value corresponding to the first model parameter, that is, the first gradient storage unit is configured to store an accumulated gradient value corresponding to a model parameter corresponding to a sample feature whose identifier is the first identifier. In this application, because all sample features whose identifiers are the first identifier correspond to the first model parameter, this application is described as "the first gradient storage unit is configured to store the accumulated gradient value corresponding to the first model parameter".

The data processing method in this application may be performed by one server, or may be performed by a server cluster including a plurality of servers. The server is a server used for model training, and the server is configured to manage a model parameter. For example, the server is an artificial intelligence (artificial intelligence, AI) server, and the server is also referred to as a parameter server (parameter server, PS).

According to the technical solutions provided in this application, the mapping relationship is the mapping relationship between the sample feature identifier and the gradient storage address, and the mapping relationship includes the mapping relationship between the first identifier and the first gradient storage address. Therefore, after the server determines, based on the loss value of the first prediction data and the initial value of the first model parameter, the first gradient value corresponding to the first model parameter, the server may quickly determine the first gradient storage address based on the first identifier (the identifier of the first sample feature herein) and the mapping relationship, and further accumulate the first gradient value corresponding to the first model parameter to the accumulated gradient value stored in the first gradient storage address. When the server trains the recommendation model, the server may quickly determine the first gradient storage address based on the first identifier and the mapping relationship, to obtain the accumulated gradient value stored in the first gradient storage address, and adjust the parameter value of the first model parameter based on the accumulated gradient value stored in the first gradient storage address. In this way, data processing efficiency in a model training process can be improved, and model training efficiency can be further improved. In addition, because the accumulated gradient value corresponding to the first model parameter instead of a plurality of gradient values corresponding to the first model parameter is stored in the first gradient storage address, the server does not need to accumulate gradient values when training the recommendation model. This further improves data processing efficiency and model training efficiency in the model training process. In this application, the first gradient storage address indicates the first gradient storage unit, and the accumulated gradient value stored in the first gradient storage address is an accumulated gradient value stored in the first gradient storage unit. For brevity of description, the accumulated gradient value stored in the first gradient storage address is described as "the accumulated gradient value stored in the first gradient storage address" in this application. Meanings of other similar descriptions are the same.

Optionally, determining the first gradient storage address based on the first identifier and the mapping relationship includes: determining a first index storage address based on the first identifier and a first mapping relationship, where the first mapping relationship is a mapping relationship between an identifier of a sample feature and an index storage address, the first mapping relationship includes a mapping relationship between the first identifier and the first index storage address, the first index storage address indicates a first index storage unit, and the first index storage unit is configured to store index information corresponding to the first identifier; and determining the first gradient storage address based on the index information stored in the first index storage unit. Specifically, the server determines the first index storage unit based on the first index storage address, and further determines the first gradient storage address based on the index information stored in the first index storage unit.

According to the technical solutions provided in this application, the first mapping relationship is the mapping relationship between the identifier of the sample feature and the index storage address, and the first mapping relationship includes the mapping relationship between the first identifier and the first index storage address. Therefore, after the server obtains the first gradient value corresponding to the first model parameter, the server may quickly determine the first index storage address based on the first identifier and the first mapping relationship, and further quickly determine the first gradient storage address based on the index information stored in the first index storage address. This can improve efficiency of determining the first gradient storage address by the server, and further improve data processing efficiency in the model training process. In this application, the first index storage address indicates the first index storage unit, and the index information stored in the first index storage address is the accumulated gradient value stored in the first index storage unit. For brevity of description, the index information is described as "the index information stored in the first index storage address" in this application. Meanings of other similar descriptions are the same.

Optionally, determining the first gradient storage address based on the index information stored in the first index storage unit includes: when the index information stored in the first index storage unit includes a gradient storage address, determining, as the first gradient storage address, the gradient storage address stored in the first index storage unit; or when the index information stored in the first index storage unit does not include a gradient storage address, determining a first idle storage unit in pre-created first storage space as the first gradient storage unit, or creating second storage space and determining a second idle storage unit in the second storage space as the first gradient storage unit; and determining an address of the first gradient storage unit as the first gradient storage address. The first storage space and the second storage space each include at least one storage unit.

According to the technical solutions provided in this application, when the index information stored in the first index storage unit includes the gradient storage address, the server directly determines, as the first gradient storage address, the gradient storage address stored in the first index storage unit. In this way, the first gradient storage address can be quickly determined, so that efficiency of determining the first gradient storage address by the server can be improved. When the index information stored in the first index storage unit does not include the gradient storage address, the server may determine the first gradient storage address based on an idle storage unit. Therefore, regardless of whether the index information stored in the first index storage unit includes the gradient storage address, the server may determine the first gradient storage address used to store the accumulated gradient value corresponding to the model parameter corresponding to the sample feature with the first identifier, so that flexibility of determining the gradient storage address by the server can be improved.

Optionally, the method further includes: storing the first gradient storage address in the first index storage unit after the index information stored in the first index storage unit does not include the gradient storage address and the address of the first gradient storage unit is determined as the first gradient storage address.

According to the technical solutions provided in this application, when the index information stored in the first index storage unit by the server does not include the gradient storage address, the server stores the first gradient storage address in the first index storage unit after determining the first gradient storage address. Therefore, the server can subsequently quickly determine the first gradient storage address based on the index information stored in the first index storage unit.

Optionally, the index information stored in the first index storage unit includes status information, the status information indicates that a storage status corresponding to the first identifier is an initial state or an accumulation state. The method further includes: when the status information indicates that the storage status corresponding to the first identifier is the initial state, determining that the index information stored in the first index storage unit does not include the gradient storage address; and when the status information indicates that the storage status corresponding to the first identifier is the accumulation state, determining that the index information stored in the first index storage unit includes the gradient storage address. For example, the first index storage unit includes a status field used to record the status information and an address field used to record the gradient storage address. The address field is located after the status field, and a length of the status field is less than a length of the address field.

According to the technical solutions provided in this application, because the index information stored in the first index storage unit includes the status information, the server can quickly determine, based on the status information, whether the index information stored in the first index storage unit includes the gradient storage address. This can improve efficiency of determining, by the server, whether the index information stored in the first index storage unit includes the gradient storage address.

Optionally, the method further includes: when the status information indicates that the storage status corresponding to the first identifier is the initial state, updating the status information after storing the first gradient storage address in the first index storage unit. Updated status information indicates that the storage status corresponding to the first identifier is the accumulation state. The server updates the status information, so that the server can subsequently quickly determine, based on the status information, that the index information stored in the first index storage unit includes the gradient storage address.

Optionally, adjusting the parameter value of the first model parameter based on the accumulated gradient value stored in the first gradient storage unit includes: determining, based on the accumulated gradient value stored in the first gradient storage unit, an average gradient value corresponding to the first identifier; and adjusting the parameter value of the first model parameter based on the average gradient value corresponding to the first identifier. The average gradient value corresponding to the first identifier is an average value of accumulated gradient values stored in the first gradient storage unit.

According to the technical solutions provided in this application, because the first gradient storage unit stores the accumulated gradient value corresponding to the first model parameter, the server can quickly determine, based on the accumulated gradient value stored in the first gradient storage unit, the average gradient value corresponding to the first identifier, and adjust the parameter value of the first model parameter based on the average gradient value corresponding to the first identifier. This can improve efficiency of training the recommendation model.

Optionally, both the first user feature and the first content feature are vectors. In other words, both a user feature and a content feature are embedding features.

According to the technical solutions provided in this application, the server trains the recommendation model based on the embedding user feature and content feature. In comparison with a manner in which the recommendation model is trained based on the user feature and content feature in a natural language, in this manner, efficiency of training the recommendation model can be improved.

According to a second aspect, a data processing apparatus is provided, and includes modules configured to perform the data processing method according to any one of the first aspect or the optional manners of the first aspect. The modules in the data processing apparatus may be implemented based on software, hardware, or a combination of software and hardware, and these modules may be randomly combined or split based on a specific implementation.

According to a third aspect, a data processing apparatus is provided, and includes a memory and a processor. The memory is configured to store a computer program. The processor is configured to execute the computer program stored in the memory, to enable the data processing apparatus to perform the data processing method according to any one of the first aspect or the optional manners of the first aspect. Optionally, the data processing apparatus is a server.

According to a fourth aspect, a compute device cluster is provided, and includes at least one compute device. Each compute device in the at least one compute device includes a processor and a memory. The processor in the at least one compute device is configured to execute instructions stored in the memory in the at least one compute device, to enable the compute device cluster to perform the data processing method according to any one of the first aspect or the optional manners of the first aspect.

Optionally, the compute device is a server, and the compute device cluster is a server cluster.

That is, this application provides a server cluster, including at least one server. Each server in the at least one server includes a processor and a memory. The processor in the at least one server is configured to execute instructions stored in the memory in the at least one server, to enable the server cluster to perform the data processing method according to any one of the first aspect or the optional manners of the first aspect.

According to a fifth aspect, a computer-readable storage medium is provided. The computer-readable storage medium stores a computer program. When the computer program is executed, the method according to any one of the first aspect or the optional manners of the first aspect is implemented.

According to a sixth aspect, a computer program product is provided. The computer program product includes a program or code. When the program or the code is executed, the method according to any one of the first aspect or the optional manners of the first aspect is implemented.

For technical effect of the second aspect to the sixth aspect, refer to the technical effect of the first aspect. Details are not described herein again.

### BRIEF DESCRIPTION OF DRAWINGS

FIG. 1 is a diagram of obtaining prediction data by a recommendation model based on sample data according to an embodiment of this application;
FIG. 2 is a diagram of an implementation environment according to an embodiment of this application;
FIG. 3 is a diagram of another implementation environment according to an embodiment of this application;
FIG. 4 is a diagram of training a recommendation model according to an embodiment of this application;
FIG. 5 is another diagram of training a recommendation model according to an embodiment of this application;
FIG. 6 is a flowchart of a data processing method according to an embodiment of this application;
FIG. 7 is a diagram of storage space according to an embodiment of this application;
FIG. 8 is another diagram of storage space according to an embodiment of this application;
FIG. 9 is a diagram of a data processing apparatus according to an embodiment of this application;
FIG. 10 is a diagram of a server according to an embodiment of this application; and
FIG. 11 is a diagram of a server cluster according to an embodiment of this application.

### DESCRIPTION OF EMBODIMENTS

The following further describes in detail implementations of this application with reference to accompanying drawings.

Emergence and popularization of the Internet bring a large amount of data to users, and meet requirements of the users in a data era for data. However, an amount of data greatly increases with rapid development of the network, and consequently, it is difficult for a user to obtain data content that the user is concerned about from massive data. Therefore, it is of great significance to select, from massive data based on a recommendation model, the data content that the user is concerned about and recommend the selected data content to the user. For example, a commodity, a video, news, and the like that the user is concerned about are selected from the massive data based on the recommendation model, and are recommended to the user.

The recommendation model may be used to recommend data content to a user based on an association degree between a user feature and a content feature. For example, for any user, the recommendation model is used to select, from massive data based on a user feature of the user, data content whose content feature matches the user feature, and recommend the selected data content to the user. For example, the recommendation model is used to select, from the massive data based on the user feature of the user, data content with a specific content feature, and recommend the data content to the user, where an association degree between the specific content feature and the user feature is greater than a preset threshold. The recommendation model may be various possible machine learning models such as a deep neural network model and a convolutional neural network model. The recommendation model may be obtained by a server through training based on sample data. For example, the server obtains a sample data set, and trains the recommendation model based on the sample data set. The sample data set includes a plurality of pieces of sample data, each piece of sample data corresponds to one piece of standard prediction data, the standard prediction data corresponding to each piece of sample data may be a label value of the sample data (or referred to as labeled data), and the standard prediction data corresponding to each piece of sample data may be obtained by labeling the sample data manually or by a computer. Specifically, for each piece of sample data in the sample data set, the server extracts a plurality of sample features of the sample data, each of the plurality of sample features has an identifier, and sample features with a same identifier correspond to a same model parameter of the recommendation model. The plurality of sample features include a user feature and a content feature. The server inputs the user feature and the content feature into the to-be-trained recommendation model, so that the to-be-trained recommendation model performs calculation based on the user feature and the content feature to obtain prediction data corresponding to the sample data. The prediction data represents an association degree between the user feature and the content feature. For ease of description, the prediction data obtained by the recommendation model through calculation based on the user feature and the content feature in a training process is referred to as training prediction data. For training prediction data corresponding to each piece of sample data, the server calculates a loss value of the training prediction data (where the loss value of the training prediction data corresponding to each piece of sample data is a loss value of the training prediction data relative to the standard prediction data corresponding to the sample data), and determines, based on the loss value of the training prediction data and an initial value of a model parameter corresponding to each sample feature of the sample data, a gradient value corresponding to the model parameter. Further, the server determines an average value of gradient values (namely, an average gradient value) of the model parameter (where the sample features with the same identifier correspond to the same model parameter) corresponding to the sample features with the same identifier, and adjusts a parameter value of the model parameter based on the average gradient value to train the recommendation model. The server trains the recommendation model based on the pieces of sample data in the sample data set until a convergence condition is met, and ends the process of training the recommendation model. The convergence condition may include at least one of the following: A quantity of training times reaches a preset quantity of times, a loss value of training prediction data obtained in a plurality of consecutive training processes fluctuates slightly, and the loss value of the training prediction data obtained in the plurality of consecutive training processes is less than a preset loss value. One training process is also referred to as one iteration process or one training step (step).

In the process of training the recommendation model, after determining the gradient values corresponding to the model parameter corresponding to the sample features, the server first stores, in storage space of the server, the gradient values corresponding to the model parameter, and determines, based on the gradient values that correspond to the model parameter and that are stored in the storage space of the server, the average value of the gradient values corresponding to the model parameter corresponding to the sample features with the same identifier. The storage space of the server includes a plurality of gradient storage units, and these gradient storage units are configured to store the gradient values corresponding to the model parameter. For example, for each piece of sample data in the sample data set, after obtaining the training prediction data corresponding to the sample data, the server calculates a loss value of the training recommendation data, calculates a hash value of each sample feature of the sample data, and determines, based on the loss value of the training prediction data and the initial value of the model parameter corresponding to each sample feature of the sample data, the gradient value corresponding to the model parameter. The server establishes a mapping relationship between the hash value of each sample feature of the sample data in the sample data set and a gradient storage address, and stores, in a corresponding gradient storage address based on the mapping relationship, the gradient value corresponding to the model parameter corresponding to the sample feature (that is, stores the gradient value in a gradient storage unit indicated by the corresponding gradient storage address). The server obtains, based on the mapping relationship, gradient values stored in gradient storage addresses corresponding to hash values of sample features with a same identifier (namely, gradient values stored in gradient storage units indicated by the gradient storage addresses); calculates an average value of the gradient values stored in the gradient storage addresses corresponding to the hash values of the sample features with the same identifier; and adjusts, based on the average value, a parameter value of the model parameter corresponding to the sample features with the same identifier. In a process of establishing the mapping relationship, to avoid a hash conflict, for sample features with a same hash value, the server further determines key codes of the sample features, calculates hash values of key codes of the sample features, and establishes the mapping relationship based on the hash values of the key codes of the sample features. When the server obtains the gradient values based on the mapping relationship, the server first determines the gradient storage addresses based on the hash values of the sample features. For the sample features with the same hash value, the server further determines gradient storage addresses based on the hash values of the key codes of the sample features, and then obtains gradient values stored in the determined gradient storage addresses. However, for the sample features with the same hash value, the server needs to further search the mapping relationship based on the hash values of the key codes to determine the gradient storage addresses, resulting in low data processing efficiency in the process of training the recommendation model. The process of establishing the mapping relationship is also referred to as a hash mapping (hash map) process. The mapping relationship may be a hash table. Content stored in the hash table is a key-value (key-value) pair. A "key" field in the key-value pair is used to record a hash value, and a "value" field is used to record a gradient storage address.

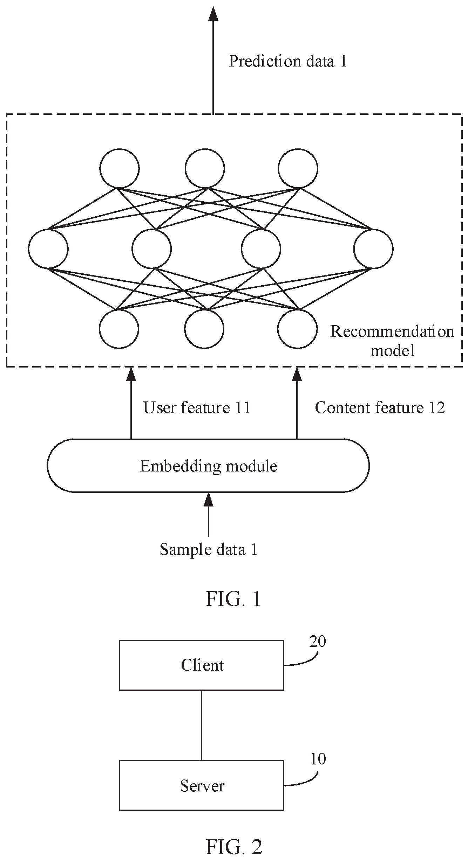

The sample data may be natural language data, and the sample feature may be an embedding (embedding) feature, in other words, the sample feature may be a vector. The natural language data is data represented by using a natural language. For example, a sentence and a piece of text are natural language data. The embedding feature is a vector obtained by performing feature extraction on the natural language data by using an embedding technology. The vector can reflect a difference between features (for example, sample features), and facilitate determining of a distance between the features (for example, the sample features). The vector obtained by performing feature extraction on the natural language data by using the embedding technology may also be referred to as a dense vector. For example, as shown in FIG. 1, the server (not shown in FIG. 1) includes an embedding module. The embedding module performs feature extraction on sample data 1 by using the embedding technology, to obtain a user feature 11 and a content feature 12, where both the user feature 11 and the content feature 12 are vectors. The embedding module inputs the user feature 11 and the content feature 12 into the to-be-trained recommendation model. The to-be-trained recommendation model performs feature cross calculation on the user feature 11 and the content feature 12 to obtain prediction data 1 corresponding to the sample data 1, where the prediction data 1 represents an association degree between the user feature 11 and the content feature 12.

In fields such as e-commerce, video, and news, there are a large quantity of types and a large quantity of pieces of sample data, and a quantity of sample features even reaches more than 10 billion. Therefore, how to improve efficiency of training the recommendation model for the large quantity of pieces of sample data is always an important issue concerned in the industry.

The following describes the technical solutions in this application. Implementation environments in embodiments of this application are first described.

For example, FIG. 2 is a diagram of an implementation environment according to an embodiment of this application. The implementation environment includes a server 10 and a client 20. The client 20 is communicatively connected to the server 10. For example, the client 20 is communicatively connected to the server 10 through a network like a local area network or the Internet. The client 20 may send a sample data set to the server 10, and the server 10 performs, based on the sample data set sent by the client 20, the data processing method provided in embodiments of this application, to train a recommendation model. In the implementation environment shown in FIG. 2, the server 10 may implement, by running an executable program, the data processing method provided in embodiments of this application. For example, the executable program in the data processing method may be presented in a form of an application installation package. After the application installation package is installed in the server 10, the data processing method can be implemented by running the executable program.

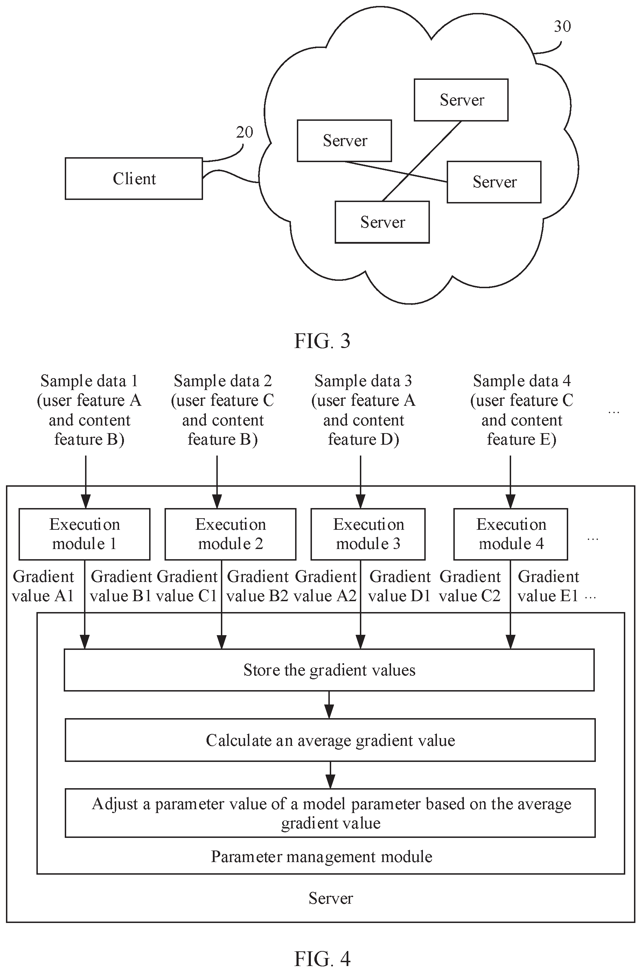

For another example, FIG. 3 is a diagram of another implementation environment according to an embodiment of this application. The implementation environment includes a server cluster 30 and a client 20. The client 20 is communicatively connected to the server cluster 30. For example, the client 20 is communicatively connected to the server cluster 30 through a network like a local area network or the Internet. The client 20 may send a sample data set to the server cluster 30, and the server cluster 30 performs, based on the sample data set sent by the client 20, the data processing method provided in embodiments of this application, to train a recommendation model. As shown in FIG. 3, the server cluster 30 includes a plurality of servers (four servers are used as an example in FIG. 3). The client 20 may send all or a part of sample data in the sample data set to each server in the server cluster 30, and each server in the server cluster 30 performs, based on the sample data sent by the client 20, the data processing method provided in embodiments of this application, to train the recommendation model. In the implementation environment shown in FIG. 3, the server cluster 30 may implement, by running an executable program, the data processing method provided in embodiments of this application. For example, each server in the server cluster 30 implements, by running the executable program, the data processing method provided in embodiments of this application. For example, the executable program in the data processing method is presented in a form of an application installation package. After the application installation package is installed in the server, the data processing method can be implemented by running the executable program. In some embodiments, each server in the server cluster 30 is also referred to as a node (node) or a service node.

In an implementation, the client 20 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, or the like. The server cluster 30 may be a cloud computing service center. In embodiments of this application, the server is a server used for model training, and the server may be configured to manage a model parameter. For example, the server is an artificial intelligence (artificial intelligence, AI) server, and the server may also be referred to as a parameter server (parameter server, PS).

For example, in a process in which the server trains the recommendation model based on the sample data in the sample data set, the server obtains the to-be-trained recommendation model; extracts a sample feature of the sample data in the sample data set; and trains the to-be-trained recommendation model based on the sample feature of the sample data in the sample data set. In each training process, sample features that need to be used by the server are highly sparse, that is, the server usually uses only sample features of a part of sample data in the sample data set. Therefore, in each training process, the server initializes, based on initial values of model parameters corresponding to the sample features that need to be used in the current training process, model parameters that need to be adjusted in the current training process (namely, the model parameters corresponding to the sample features that need to be used in the current training process). An initialized recommendation model is the to-be-trained recommendation model in the current training process. In each training process, the server inputs, to the to-be-trained recommendation model, a user feature and a content feature that are of each piece of sample data and that needs to be used in the current training process, so that the to-be-trained recommendation model performs calculation based on the user feature and the content feature to obtain prediction data (namely, training prediction data) corresponding to the sample data. The server determines, based on the training prediction data corresponding to the sample data and an initial value of a model parameter corresponding to each sample feature of the sample data, a gradient value (gradients) corresponding to the model parameter; determines an average value of gradient values corresponding to a model parameter corresponding to sample features with a same identifier; and adjusts a parameter value of the model parameter based on the average value of the gradient values corresponding to the model parameter corresponding to the sample features with the same identifier.

It can be learned from the foregoing descriptions that a process of training the recommendation model may be performed by one server, or may be performed by a plurality of servers. When the process of training the recommendation model is performed by a plurality of servers, the plurality of servers may use a distributed parallel training manner.

For example, FIG. 4 is a diagram of training a recommendation model according to an embodiment of this application. In FIG. 4, an example in which a process of training the recommendation model is performed by one server is used for description. The server may be the server 10 in the implementation environment shown in FIG. 2, or may be any server in the server cluster 30 provided in the implementation environment shown in FIG. 3. As shown in FIG. 4, the server includes a parameter management module and a plurality of execution modules. The execution module is also referred to as a worker (worker). The execution module is responsible for processes such as sample data loading, forward calculation (calculation for a loss value of training prediction data), and backward calculation (calculation for a gradient value corresponding to a model parameter) in the model training process. For example, the execution module is responsible for interacting with a client to receive sample data sent by the client (that is, loading the sample data). In each training process, for each piece of sample data that needs to be used in the current training process and that is received by the execution module, the execution module inputs a user feature of the sample data and a content feature of the sample data into the to-be-trained recommendation model, so that the to-be-trained recommendation model performs calculation based on the user feature and the content feature to obtain training prediction data corresponding to the sample data. The execution module calculates a loss value of the training prediction data (namely, a loss value of the training prediction data relative to standard prediction data corresponding to the sample data); determines, based on the loss value of the training prediction data and an initial value of a model parameter corresponding to each sample feature of the sample data, a gradient value corresponding to the model parameter; and sends, to the parameter management module, the gradient value corresponding to the model parameter corresponding to each sample feature of the sample data. In other words, the execution module is configured to perform a process of calculating, based on the to-be-trained recommendation model, the training prediction data corresponding to the sample data and the gradient value corresponding to the model parameter corresponding to each sample feature of the sample data. For example, as shown in FIG. 4, sample data 1 includes a user feature A and a content feature B, sample data 2 includes a user feature C and a content feature B, sample data 3 includes a user feature A and a content feature D, and sample data 4 includes a user feature C and a content feature E. It is assumed that model parameters of the to-be-trained recommendation model include a model parameter A, a model parameter B, a model parameter D, and a model parameter E, the user feature A corresponds to the model parameter A, the content feature B corresponds to the model parameter B, the user feature C corresponds to a model parameter C, the content feature D corresponds to the model parameter D, and the content feature E corresponds to the model parameter E. An execution module 1 calculates, based on the to-be-trained recommendation model, the user feature A of the sample data 1, and the content feature B of the sample data 1, training prediction data corresponding to the sample data 1; calculates a loss value of the training prediction data corresponding to the sample data 1; determines, based on the loss value of the training prediction data corresponding to the sample data 1 and an initial value corresponding to the model parameter A, a gradient value A1 corresponding to the model parameter A; and determines, based on the loss value of the training prediction data corresponding to the sample data 1 and an initial value corresponding to the model parameter B, a gradient value B1 corresponding to the model parameter B. An execution module 2 calculates, based on the to-be-trained recommendation model, the user feature C of the sample data 2, and the content feature B of the sample data 2, training prediction data corresponding to the sample data 2; calculates a loss value of the training prediction data corresponding to the sample data 2; determines, based on the loss value of the training prediction data corresponding to the sample data 2 and an initial value corresponding to the model parameter C, a gradient value C1 corresponding to the model parameter C; and determines, based on the loss value of the training prediction data corresponding to the sample data 2 and the initial value corresponding to the model parameter B, a gradient value B2 corresponding to the model parameter B. An execution module 3 calculates, based on the to-be-trained recommendation model, the user feature A of the sample data 3, and the content feature D of the sample data 3, training prediction data corresponding to the sample data 3; calculates a loss value of the training prediction data corresponding to the sample data 3; determines, based on the loss value of the training prediction data corresponding to the sample data 3 and the initial value corresponding to the model parameter A, a gradient value A2 corresponding to the model parameter A; and determines, based on the loss value of the training prediction data corresponding to the sample data 3 and the initial value corresponding to the model parameter D, a gradient value D1 corresponding to the model parameter D. An execution module 4 calculates, based on the to-be-trained recommendation model, the user feature C of the sample data 4, and the content feature E of the sample data 4, training prediction data corresponding to the sample data 4; calculates a loss value of the training prediction data corresponding to the sample data 4; determines, based on the loss value of the training prediction data corresponding to the sample data 4 and the initial value corresponding to the model parameter C, a gradient value C2 corresponding to the model parameter C; and determines, based on the loss value of the training prediction data corresponding to the sample data 4 and an initial value corresponding to the model parameter E, a gradient value E1 corresponding to the model parameter E. In a process in which the execution module sends, to the parameter management module, a gradient value corresponding to a model parameter corresponding to a sample feature, the execution module further sends an identifier of the sample feature to the parameter management module. For example, the execution module sends, to the parameter management module, both a gradient value corresponding to the model parameter corresponding to the sample feature and the identifier of the sample feature. The parameter management module is configured to: receive and store gradient values sent by the plurality of execution modules, determine, based on the stored gradient values, an average value of gradient values of a model parameter corresponding to sample features with a same identifier, and adjust a parameter value of the model parameter based on the average value of the gradient values of the model parameter corresponding to the sample features with the same identifier.

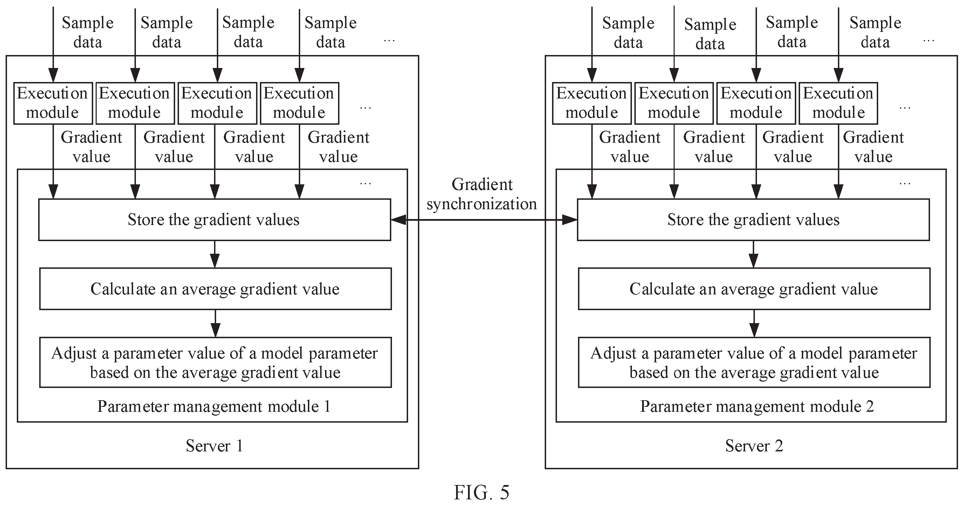

For another example, FIG. 5 is another diagram of training a recommendation model according to an embodiment of this application. In FIG. 5, an example in which a process of training the recommendation model is performed by two servers: a server 1 and a server 2 is used for description. The two servers may be any two servers in the server cluster 30 provided in the implementation environment shown in FIG. 2. As shown in FIG. 5, the server 1 and the server 2 each include a parameter management module and a plurality of execution modules. The execution module is responsible for interacting with a client to receive sample data sent by the client. In each training process, for each piece of sample data that needs to be used in the current training process and that is received by the execution module, the execution module inputs a user feature of the sample data and a content feature of the sample data into the to-be-trained recommendation model, so that the to-be-trained recommendation model performs calculation based on the user feature and the content feature to obtain training prediction data corresponding to the sample data. The execution module calculates a loss value of the training prediction data (namely, a loss value of the training prediction data relative to standard prediction data corresponding to the sample data); determines, based on the loss value of the training prediction data and an initial value of a model parameter corresponding to each sample feature of the sample data, a gradient value corresponding to the model parameter; and sends, to a parameter management module in a server in which the execution module is located, the gradient value corresponding to the model parameter corresponding to each sample feature of the sample data. In other words, the execution module is configured to perform a process of calculating, based on the to-be-trained recommendation model, the training prediction data corresponding to the sample data and the gradient value corresponding to the model parameter corresponding to each sample feature of the sample data. For example, as shown in FIG. 5, each execution module in the server 1 sends, to a parameter management module 1, a gradient value that corresponds to a model parameter corresponding to a sample feature and that is obtained through calculation, and each execution module in the server 2 sends, to a parameter management module 2, a gradient value that corresponds to a model parameter corresponding to a sample feature and that is obtained through calculation. In a process of sending, to the parameter management module 1, the gradient value corresponding to the model parameter corresponding to the sample feature, each execution module in the server 1 further sends an identifier of the sample feature to the parameter management module 1. In a process of sending, to the parameter management module 2, the gradient value corresponding to the model parameter corresponding to the sample feature, each execution module in the server 2 further sends an identifier of the sample feature to the parameter management module 2. For example, the execution module sends, to the corresponding parameter management module, both the gradient value corresponding to the model parameter corresponding to the sample feature and the identifier of the sample feature. The parameter management module 1 is configured to: receive and store gradient values sent by the plurality of execution modules in the server 1. The parameter management module 2 is configured to: receive and store gradient values sent by the plurality of execution modules in the server 2. As shown in FIG. 5, the parameter management module 1 and the parameter management module 2 further synchronize the gradient values stored by the parameter management module 1 and the parameter management module 2. In this way, each of the parameter management module 1 and the parameter management module 2 may obtain the gradient values stored by the other parameter management module. After the parameter management module 1 and the parameter management module 2 synchronize the gradient values, at least one of the parameter management module 1 and the parameter management module 2 determines an average value of gradient values (namely, an average gradient value) corresponding to a model parameter corresponding to sample features with a same identifier, and adjusts a parameter value of the model parameter based on the average value of the gradient values corresponding to the model parameter corresponding to the sample features with the same identifier.

In embodiments of this application, the sample data sent by the client to the server may be natural language data. The server may first perform feature extraction on the sample data by using an embedding technology, to obtain a plurality of sample features of the sample data. The plurality of sample features include a user feature and a content feature, and the plurality of sample features are all vectors. For example, the server further includes an embedding module. The embedding module is configured to: interact with the client to receive the sample data sent by the client; and perform feature extraction on the sample data by using the embedding technology to obtain the plurality of sample features of the sample data. In embodiments of this application, the server trains the recommendation model based on the embedding sample features, so that efficiency of training the recommendation model can be improved. Therefore, in some embodiments, the embedding module configured to extract the sample feature may also be referred to as an accelerator card.

FIG. 2 and FIG. 3 are example descriptions of the implementation environment of this application, and do not constitute a limitation on the implementation environment of this application. As service requirements change, the implementation environment of this application may be adjusted based on the service requirements. In addition, FIG. 4 and FIG. 5 are example descriptions of training the recommendation model, and do not constitute a limitation on training of the recommendation model. For example, FIG. 5 is the diagram of training the recommendation model in a data parallelism manner. The recommendation model may alternatively be trained in a model parallelism manner. Data parallelism means that a same to-be-trained recommendation model is deployed on a plurality of servers, sample data in a sample data set used for training is distributed to the plurality of servers, and each server independently uses a part of sample data in the sample data set to perform model training. In each training process, each server synchronizes, to another server, a gradient value obtained through calculation, so that each server can obtain an average gradient value of one training process through calculation. The average gradient value is an average value of gradient values obtained by the servers in the same training process, and each server may adjust a parameter value of a model parameter of the recommendation model based on the average gradient value. Model parallelism means that a recommendation model is divided into a plurality of sub-model parts, different sub-model parts are deployed on different servers, and during training, the sub-model parts on the different servers calculate a same piece of sample data in the sample data set based on a structure sequence of the recommendation model. In one training process, gradient values may be obtained through calculation performed by the sub-model parts on the different servers, and parameters of each sub-model part may be updated through forward propagation or backward propagation based on the gradient values. After a plurality of training iterations is performed and a training requirement is met, the sub-model parts on the servers are reorganized based on a structure of the recommendation model, to obtain a trained recommendation model.

The foregoing describes the implementation environments of this application, and the following describes a method embodiment of this application.

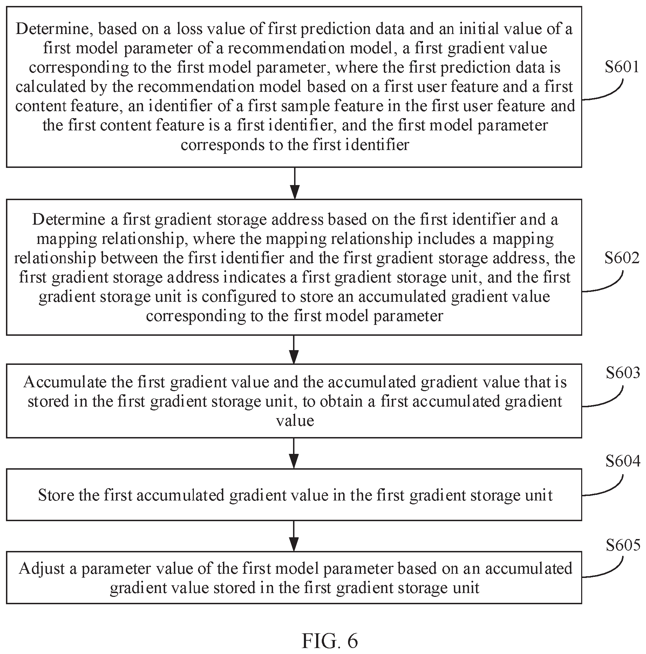

Refer to FIG. 6. FIG. 6 is a flowchart of a data processing method according to an embodiment of this application. The data processing method is performed by a server. The server may be the server 10 in the implementation environment shown in FIG. 2 or any server in the implementation environment shown in FIG. 3. As shown in FIG. 6, the method includes the following steps S601 to S605.

S601: Determine, based on a loss value of first prediction data and an initial value of a first model parameter of a recommendation model, a first gradient value corresponding to the first model parameter, where the first prediction data is calculated by the recommendation model based on a first user feature and a first content feature, an identifier of a first sample feature in the first user feature and the first content feature is a first identifier, and the first model parameter corresponds to the first identifier.

Both the first user feature and the first content feature are sample features of first sample data. The first sample feature is any one of the first user feature and the first content feature. For example, the first sample feature is the first user feature, or the first sample feature is the first content feature. The first sample data is any piece of sample data in a sample data set used to train the recommendation model. The first sample data may be natural language data, and both the first user feature and the first content feature may be vectors. Optionally, the server performs feature extraction on the first sample data by using an embedding technology, to obtain a plurality of sample features of the first sample data. The plurality of sample features are all vectors. The plurality of sample features include the first user feature and the first content feature. Each of the plurality of sample features has an identifier, and identifiers of different sample features in the plurality of sample features may be the same or may be different. Identifiers of sample features of different sample data may be the same or may be different. Sample features with a same identifier correspond to a same model parameter of the recommendation model. For example, a plurality of sample features of sample data 1 include a user feature A and a content feature B, a plurality of sample features of sample data 3 include a user feature A and a content feature D, an identifier of the user feature A of the sample data 1 and an identifier of the user feature A of the sample data 3 are both "01", the identifier of the user feature A of the sample data 1 and the user feature A of the sample data 3 both correspond to a model parameter 1 of the recommendation model, an identifier of the content feature B is "02", the content feature B corresponds to a model parameter 2 of the recommendation model, an identifier of the content feature D is "04", and the content feature D corresponds to a model parameter 4 of the recommendation model. Optionally, the server includes an embedding module. The embedding module performs feature extraction on the first sample data by using the embedding technology.

In this embodiment of this application, the recommendation model is used to recommend data content to a user based on an association degree between a user feature and a content feature. For example, the recommendation model is used to recommend data content with a specific content feature to the user with a specific user feature, where the specific user feature matches the specific content feature. For example, the association degree between the specific user feature and the specific content feature is greater than a preset threshold. The first prediction data is calculated by the recommendation model based on the first user feature and the first content feature, and the first prediction data represents an association degree (namely, a predicted association degree) between the first user feature and the first content feature. The loss value of the first prediction data is a loss value of the first prediction data relative to standard prediction data corresponding to the first sample data. The standard prediction data corresponding to the first sample data may be a label value of the first sample data (or referred to as labeled data), and the standard prediction data corresponding to the first sample data may be obtained by labeling the first sample data manually or by a computer. The standard prediction data corresponding to the first sample data may represent a standard association degree (namely, a labeled association degree) between the first user feature and the first content feature. Optionally, after obtaining the first user feature and the first content feature, the server inputs the first user feature and the first content feature into the to-be-trained recommendation model, so that the to-be-trained recommendation model performs calculation based on the first user feature and the first content feature to obtain the first prediction data (namely, training prediction data). The server may calculate the loss value of the first prediction data by using a loss function. The server may calculate, based on the loss value of the first prediction data and the initial value of the first model parameter according to a gradient calculation formula, the first gradient value corresponding to the first model parameter. The gradient calculation formula may be an expression of a derivative function of the loss function, independent variables of the gradient calculation formula are a loss value of prediction data and an initial value of a model parameter, and a dependent variable of the gradient calculation formula is a gradient value corresponding to the model parameter.

In this embodiment of this application, the to-be-trained recommendation model may be a recommendation model obtained by initializing model parameters of the recommendation model based on initial values of the model parameters. In each training process, sample features that need to be used by the server is highly sparse, and there is a correspondence between a model parameter and an identifier of a sample feature. Therefore, in each training process, the server may initialize model parameters based on initial values of the model parameters corresponding to the sample features that need to be used in the current training process (namely, the model parameters corresponding to the identifiers of the sample features that need to be used in the current training process), that is, update parameter values of the model parameters to the initial values.

In an optional embodiment, the server includes parameter storage space. The parameter storage space includes a plurality of parameter storage units. Each parameter storage unit is configured to store a parameter value of one model parameter (in other words, each parameter storage unit corresponds to one model parameter). Each parameter storage unit corresponds to one sample feature identifier (namely, an identifier of a sample feature). Each parameter storage unit is configured to store a parameter value of a model parameter corresponding to the sample feature with the corresponding identifier. In each training process, for each model parameter that needs to be adjusted in the current training process (namely, each model parameter corresponding to a sample feature that needs to be used in the current training process), the server obtains a parameter value of the model parameter from the parameter storage space; determines, as an initial value of the model parameter, the parameter value of the model parameter obtained from the parameter storage space; and initializes the model parameter based on the initial value of the model parameter. The parameter value stored in each parameter storage unit may be a parameter value that is set manually or set by a computer, or may be a parameter value updated in the parameter storage unit in a previous training process (that is, the server uses, as an initial value of a model parameter, in a next training process a parameter value that is of the model parameter and that is calculated in the previous training process). For example, a first parameter storage unit in the parameter storage space is configured to store a parameter value of the first model parameter, and the first parameter storage unit corresponds to the first identifier (an identifier of the first sample data). The server determines the first parameter storage unit based on the identifier of the first sample data (namely, the first identifier); obtains the parameter value stored in the first parameter storage unit; determines, as the initial value of the first model parameter, the parameter value obtained from the first parameter storage unit; and initializes the first model parameter based on the initial value of the first model parameter.

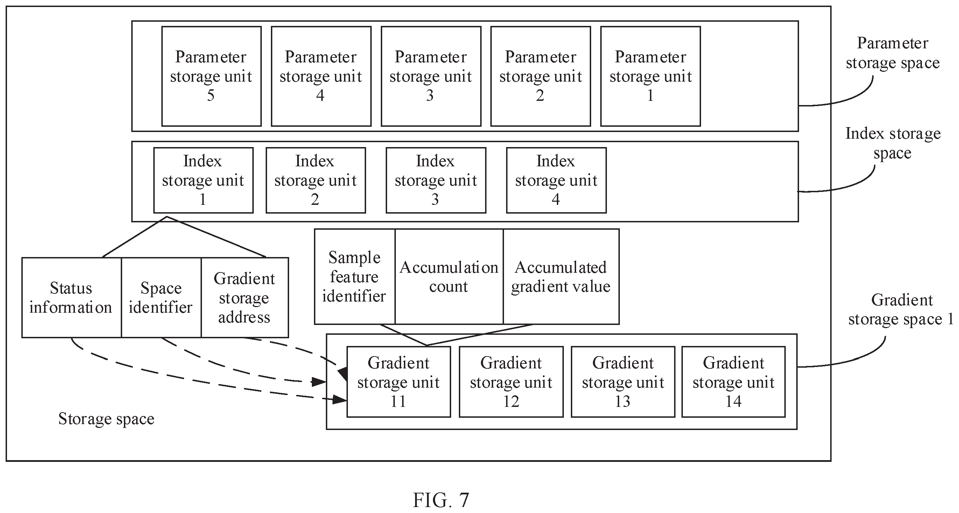

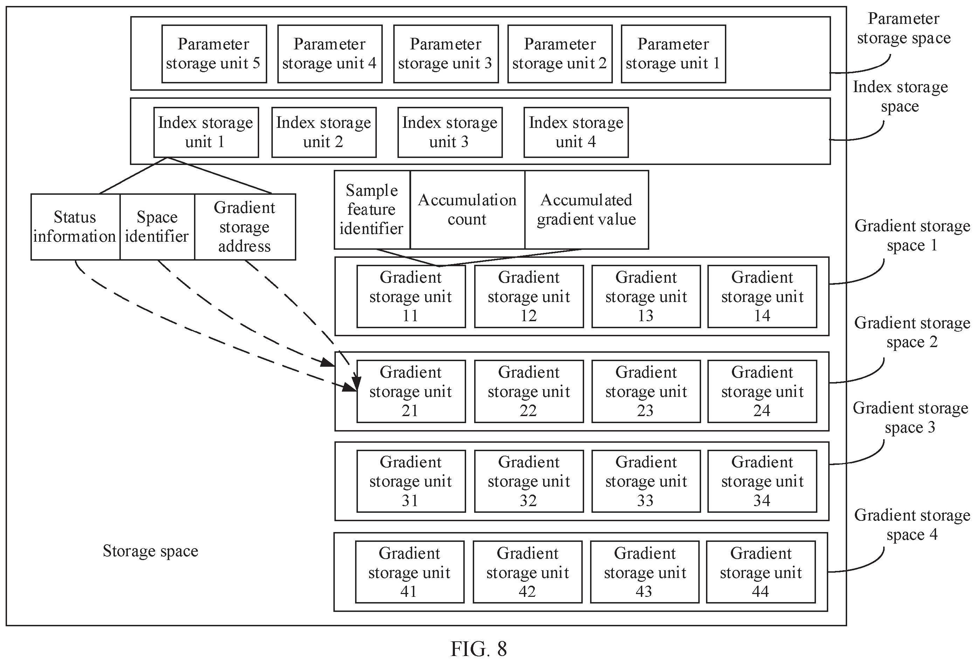

In an example, refer to FIG. 7 and FIG. 8. FIG. 7 and FIG. 8 each are a diagram of storage space of a server according to an embodiment of this application. As shown in FIG. 7 and FIG. 8, the storage space of the server includes parameter storage space, and the parameter storage space includes a plurality of parameter storage units (FIG. 7 and FIG. 8 are described by using an example in which the plurality of parameter storage units are parameter storage units 1 to 5). Each of the plurality of parameter storage units is configured to store a parameter value of one model parameter, and each parameter storage unit corresponds to one sample feature identifier. For example, the parameter storage unit 1 corresponds to a sample feature identifier "01" and is used for a parameter value of a model parameter 1 (the model parameter 1 corresponds to the sample feature identifier "01"); the parameter storage unit 2 corresponds to a sample feature identifier "02" and is used for a parameter value of a model parameter 2 (the model parameter 2 corresponds to the sample feature identifier "02"); the parameter storage unit 3 corresponds to a sample feature identifier "03" and is used for a parameter value of a model parameter 3 (the model parameter 3 corresponds to the sample feature identifier "03"); and the rest can be deduced by analogy. For example, the first model parameter is the model parameter 1, and the first identifier is the sample feature identifier "01". The server determines, based on the first identifier (namely, the sample feature identifier "01"), that the first parameter storage unit is the parameter storage unit 1; obtains the parameter value stored in the parameter storage unit 1; determines, as an initial value of the model parameter 1, the parameter value obtained from the parameter storage unit 1; and initializes the model parameter 1 based on the initial value of the model parameter 1.

S602: Determine a first gradient storage address based on the first identifier and a mapping relationship, where the mapping relationship includes a mapping relationship between the first identifier and the first gradient storage address, the first gradient storage address indicates a first gradient storage unit, and the first gradient storage unit is configured to store an accumulated gradient value corresponding to the first model parameter.

After the server determines the first gradient value corresponding to the first model parameter, because the first model parameter corresponds to the identifier of the first sample feature (namely, the first identifier), the server determines the first gradient storage address based on the first identifier and the mapping relationship.

The first gradient storage address indicates the first gradient storage unit, the first gradient storage unit stores the accumulated gradient value corresponding to the first model parameter, and the accumulated gradient value corresponding to the first model parameter is an accumulated value of gradient values corresponding to the first model parameter. Optionally, the first gradient storage unit is further configured to store an accumulation count corresponding to the first identifier and the first model parameter. The accumulation count corresponding to the first model parameter is an accumulation count of the gradient value corresponding to the first model parameter, and may also be referred to as an accumulation count corresponding to the first identifier. This is not limited in embodiments of this application. For example, the first gradient storage unit includes a sample feature identifier field, an accumulation count field, and an accumulated gradient value field. The first identifier is stored in the sample feature identifier field, the accumulation count is stored in the accumulation count field, and the accumulated gradient value is stored in the accumulated gradient value field.

The mapping relationship is a mapping relationship between an identifier of a sample feature (referred to as a sample feature identifier for short) and a gradient storage address. Optionally, the mapping relationship includes a first mapping relationship and a second mapping relationship. The first mapping relationship is a mapping relationship between a sample feature identifier and an index storage address, and the second mapping relationship is a mapping relationship between an index storage address and index information. The index information may include a gradient storage address. In this way, the mapping relationship between the sample feature identifier and the gradient storage address is implemented by using the first mapping relationship and the second mapping relationship. For example, the first mapping relationship includes a one-to-one mapping relationship between a plurality of sample feature identifiers and a plurality of index storage addresses, and the second mapping relationship includes a one-to-one mapping relationship between the plurality of index storage addresses and a plurality of pieces of index information. Each of the plurality of index storage addresses indicates one index storage unit, and each index storage unit is configured to store index information corresponding to a corresponding sample feature identifier. The first mapping relationship includes a mapping relationship between the first identifier and a first index storage address, and the second mapping relationship includes a mapping relationship between the first index storage address and first index information. The first index storage address indicates a first index storage unit, and the first index storage unit is configured to store index information corresponding to the first identifier.

In an optional embodiment, the server determines the first index storage address based on the first identifier and the first mapping relationship, and determines the first gradient storage address based on the first index storage address and the second mapping relationship. Specifically, the first mapping relationship is a one-to-one correspondence between sample feature identifiers and gradient storage addresses. The server searches the first mapping relationship based on the first identifier, and determines, as the first index storage address based on a search result, an index storage address that corresponds to the first identifier and that is in the first mapping relationship. The server determines, as the first index storage unit, an index unit indicated by the first index storage address; obtains the index information (namely, the index information corresponding to the first identifier) stored in the first index storage unit; and determines the first gradient storage address based on the index information stored in the first index storage unit.

In an example, the first mapping relationship is shown in the following Table 1.

**Table 1 (First mapping relationship)**

| Sample feature identifier | Index storage address |
|---|---|
| 01 | Index storage address 1 |
| 02 | Index storage address 2 |
| 03 | Index storage address 3 |
| 04 | Index storage address 4 |
| ... | ... |

Refer to Table 1. The first mapping relationship includes a correspondence between the sample feature identifier "01" and the index storage address 1, a correspondence between the sample feature identifier "02" and the index storage address 2, a correspondence between the sample feature identifier "03" and the index storage address 3, a correspondence between the sample feature identifier "04" and the index storage address 4, and the rest can be deduced by analogy.

Still refer to FIG. 7 and FIG. 8. The storage space of the server further includes index storage space. The index storage space includes a plurality of index storage units (FIG. 7 and FIG. 8 are described by using an example in which the plurality of index storage units are index storage units 1 to 4). Each of the plurality of index storage units is configured to store index information corresponding to a corresponding sample feature identifier. The index information includes at least one of status information, a space identifier, and a gradient storage address. The status information indicates a storage status corresponding to a corresponding sample feature identifier. The gradient storage address indicates a gradient storage unit. The space identifier indicates gradient storage space in which the gradient storage unit indicated by the gradient storage address is located. For example, each of the plurality of index storage units includes a status information field, a space identifier field, and a gradient storage address field. The status information field is used to store the status information, the space identifier field is used to store the space identifier of the gradient storage space, and the gradient storage address field is used to store the gradient storage address. For example, the index storage address 1 indicates the index storage unit 1, and the index storage unit 1 is configured to store index information corresponding to the sample feature identifier "01". The index storage address 2 indicates the index storage unit 2, and the index storage unit 2 is configured to store index information corresponding to the sample feature identifier "02". The index storage address 3 indicates the index storage unit 3, and the index storage unit 3 is configured to store index information corresponding to the sample feature identifier "03". The index storage address 4 indicates the index storage unit 4, and the index storage unit 4 is configured to store index information corresponding to the sample feature identifier "04". The rest can be deduced by analogy. It is assumed that the first identifier is the sample feature identifier "01". The server searches the first mapping relationship shown in Table 1 based on the first identifier, to determine that the first identifier corresponds to the index storage address 1. The server determines the index storage address 1 as the first index storage address, and further determines, as the first index storage unit, the index storage unit 1 indicated by the index storage address 1.

In an optional embodiment, that the server determines the first gradient storage address based on the index information stored in the first index storage unit includes: The server determines whether the index information stored in the first index storage unit includes the gradient storage address; and when the index information stored in the first index storage unit includes the gradient storage address, the server determines, as the first gradient storage address, the gradient storage address stored in the first index storage unit; or when the index information stored in the first index storage unit does not include the gradient storage address, the server determines a first idle storage unit in pre-created first storage space as the first gradient storage unit, or the server creates second storage space and determines a second idle storage unit in the second storage space as the first gradient storage unit, and the server determines an address of the first gradient storage unit as the first gradient storage address. Both the first storage space and the second storage space are gradient storage space, the first storage space and the second storage space each include at least one storage unit, and the at least one storage unit is a gradient storage unit.

In an optional embodiment, when the index information stored in the first index storage unit does not include a gradient storage address, the server determines whether there is an idle storage unit in pre-created first storage space. If there is the idle storage unit in the first storage space, the server determines a first idle storage unit in the first storage space as the first gradient storage unit, where the first idle storage unit is any idle storage unit in the first storage space. If there is no idle storage unit in the first storage space, the server creates second storage space, where the second storage space includes at least one storage unit; and determines a second idle storage unit in the second storage space as the first gradient storage unit, where the second idle storage unit is any idle storage unit in the second storage space. In an embodiment, the server sequentially traverses gradient storage units in the first storage space to determine whether there is an idle storage unit in the first storage space. In another embodiment, the server records identifiers of idle storage units in the first storage space, and determines, based on the identifiers of the idle storage units recorded by the server, whether there is an idle storage unit in the first storage space. In still another embodiment, the server records a quantity of busy storage units in the first storage space and a total quantity of storage units in the first storage space, and determines, based on the quantity of busy storage units in the first storage space and the total quantity of storage units in the first storage space, whether there is an idle storage unit in the first storage space. For example, if the quantity of busy storage units in the first storage space is less than the total quantity of storage units in the first storage space, the server determines that there is an idle storage unit in the first storage space. Alternatively, if the quantity of busy storage units in the first storage space is equal to the total quantity of storage units in the first storage space, the server determines that there is no idle storage unit in the first storage space. In an optional embodiment, if there is no idle storage unit in the first storage space, the server obtains, by dividing the storage space of the server, a storage area as the second storage space, and obtains a plurality of gradient storage units by dividing the second storage space. This is not limited in embodiments of this application.

In an optional embodiment, the index information stored in the first index storage unit includes status information, where the status information indicates that a storage status corresponding to the first identifier is an initial state or an accumulation state. For example, when the status information is initial state information, the status information indicates that the storage status corresponding to the first identifier is the initial state. When the status information is accumulation state information, the status information indicates that the storage status corresponding to the first identifier is the accumulation state. For example, the initial state information is 0, and the accumulation state information is any non-zero information. For example, the accumulation state information is 1. The server may determine, based on the status information stored in the first index storage unit, the storage status corresponding to the first identifier. Specifically, when the status information stored in the first index storage unit indicates that the storage status corresponding to the first identifier is the initial state, the server determines that the index information stored in the first index storage unit does not include the gradient storage address. When the status information stored in the first index storage unit indicates that the storage status corresponding to the first identifier is the accumulation state, the server determines that the index information stored in the first index storage unit includes the gradient storage address. In an optional embodiment, the index information stored in the first index storage unit by the server does not include the gradient storage address, and after the server determines the address of the first gradient storage unit as the first gradient storage address, the server stores the first gradient storage address in the first index storage unit, and the server updates the status information stored in the first index storage unit. Updated status information indicates that the storage status corresponding to the first identifier is the accumulation state.

In an embodiment, still refer to FIG. 7 and FIG. 8. The first index storage unit is the index storage unit 1, index information stored in the index storage unit 1 includes the status information, and the status information is the accumulation state information. The server determines, based on the status information, that the storage status corresponding to the first identifier is the accumulation state, and further determines that the index information stored in the index storage unit 1 includes the gradient storage address (for example, the server determines that the gradient storage address is stored in the gradient storage address field in the index storage unit 1 shown in FIG. 7 and FIG. 8). The server determines, as the first gradient storage address, the gradient storage address stored in the index storage unit 1.

In another embodiment, still refer to FIG. 7 and FIG. 8. The first index storage unit is the index storage unit 1, index information stored in the index storage unit 1 includes the status information, and the status information is the initial state information. The server determines, based on the status information, that the storage status corresponding to the first identifier is the initial state, and further determines that the index information stored in the index storage unit 1 does not include the gradient storage address (for example, the server determines that no gradient storage address is stored in the gradient storage address field in the index storage unit 1 shown in FIG. 7 and FIG. 8). It is assumed that the first storage space is gradient storage space 1. When determining that the index information stored in the index storage unit 1 does not include the gradient storage address, the server determines whether there is an idle storage unit in the gradient storage space 1. In an example, as shown in FIG. 7, the server determines that there is an idle storage unit in the gradient storage space 1, and determines a first idle storage unit in the gradient storage space 1 as the first gradient storage unit. For example, the first idle storage unit is a gradient storage unit 11. That is, the server determines the gradient storage unit 11 as the first gradient storage unit. Then, the server determines an address of the gradient storage unit 11 as the first gradient storage address; stores the first gradient storage address in the index storage unit 1 (specifically, stores the first gradient storage address in the gradient storage address field in the index storage unit 1); updates the status information in the index storage unit 1 to the accumulation state information; and stores a space identifier of the gradient storage space 1 in the index storage unit 1 (specifically, stores the space identifier of the gradient storage space 1 in the space identifier field in the index storage unit 1). In another example, as shown in FIG. 8, the server determines that there is no idle storage unit in the gradient storage space 1; creates second storage space; and determines a second idle storage unit in the second storage space as the first gradient storage unit. For example, the second storage space is gradient storage space 2, and the second idle storage unit is a gradient storage unit 21. To be specific, the server determines the gradient storage unit 21 as the first gradient storage unit; then determines an address of the gradient storage unit 21 as the first gradient storage address; stores the first gradient storage address in the index storage unit 1 (specifically, stores the first gradient storage address in the gradient storage address field in the index storage unit 1); updates the status information in the index storage unit 1 to the accumulation state information; and stores a space identifier of the gradient storage space 2 in the index storage unit 1 (specifically, stores the space identifier of the gradient storage space 2 in the space identifier field in the index storage unit 1). In embodiments of this application, the gradient storage space is located in specific storage space of the server, the specific storage space is used to create (or divide) the gradient storage space, and a total capacity of the specific storage space may be determined based on a total quantity of sample features of sample data in the sample data set. For example, the total capacity of the specific storage space is 2ⁿ, where n is the total quantity of sample features of sample data in the sample data set.

S603: Accumulate the first gradient value and the accumulated gradient value that is stored in the first gradient storage unit, to obtain a first accumulated gradient value.

In an optional embodiment, the server determines the first gradient storage unit based on the first gradient storage address; obtains the accumulated gradient value stored in the first gradient storage unit; and accumulates the first gradient value and the accumulated gradient value that is stored in the first gradient storage unit, to obtain the first accumulated gradient value. For example, the first gradient storage address is a gradient storage address 1, and the gradient storage address 1 indicates the gradient storage unit 11. In other words, the first gradient storage unit is the gradient storage unit 11. Refer to FIG. 7. The gradient storage unit 11 is found based on the gradient storage address 1, and a gradient value in the gradient storage unit 11 and an accumulated gradient value that is stored in the gradient storage unit 11 are accumulated to obtain the first accumulated gradient value.

S604: Store the first accumulated gradient value in the first gradient storage unit.

In an optional embodiment, the server updates, based on the first accumulated gradient value, the accumulated gradient value stored in the first gradient storage unit. Specifically, the server deletes the accumulated gradient value stored in the first gradient storage unit, and then stores the first accumulated gradient value in the first gradient storage unit. In an example, refer to FIG. 7. The first gradient storage unit is the gradient storage unit 11. The server deletes the accumulated gradient value stored in the gradient storage unit 11, and then stores the first accumulated gradient value in the gradient storage unit 11. In another example, refer to FIG. 8. The first gradient storage unit is the gradient storage unit 21. The server deletes an accumulated gradient value stored in the gradient storage unit 21, and then stores the first accumulated gradient value in the gradient storage unit 21.

In an optional embodiment, the first gradient storage unit is further configured to store the accumulation count corresponding to the first model parameter. The accumulation count corresponding to the first model parameter is the accumulation count of the gradient value corresponding to the first model parameter, or an accumulation count of the gradient value that corresponds to the first model parameter and that is accumulated in the first gradient storage unit. In the initial state, the accumulation count corresponding to the first model parameter is an initial count (for example, 0). After the server stores the first accumulated gradient value in the first gradient storage unit, the server further updates the accumulation count stored in the first gradient storage unit. For example, the server increases the accumulation count stored in the first gradient storage unit by 1.

S605: Adjust the parameter value of the first model parameter based on an accumulated gradient value stored in the first gradient storage unit.

In an optional embodiment, the server determines, based on the accumulated gradient value stored in the first gradient storage unit, an average gradient value corresponding to the first identifier (namely, an average gradient value of gradient values corresponding to the first model parameter), and adjusts the parameter value of the first model parameter based on the average gradient value corresponding to the first identifier. In an example, the server adjusts the parameter value of the first model parameter to the average gradient value corresponding to the first identifier. In another example, the server optimizes, by using an optimizer, the average gradient value corresponding to the first identifier, to obtain an optimized gradient value, and adjusts the parameter value of the first model parameter to the optimized gradient value. The optimizer may be an adaptive moment estimation (adaptive moment estimation, Adam) optimizer or a stochastic gradient descent optimizer. An Adam algorithm used by the Adam optimizer is an extended algorithm of a stochastic gradient descent method.

In an optional embodiment, the first gradient storage unit further stores the accumulation count corresponding to the first model parameter, namely, the accumulation count corresponding to the first identifier. The server determines, based on the accumulated gradient value stored in the first gradient storage unit and the accumulation count stored in the first gradient storage unit, the average gradient value corresponding to the first identifier. For example, the server determines, as the average gradient value corresponding to the first identifier, a quotient of the accumulated gradient value stored in the first gradient storage unit and the accumulation count stored in the first gradient storage unit.

In an optional embodiment, after the server adjusts the parameter value of the first model parameter based on the accumulated gradient value stored in the first gradient storage unit, the server clears the first gradient storage unit, so that the first gradient storage unit is restored to an idle state. For example, the server deletes the first identifier, the accumulation count, and the accumulated gradient value that are stored in the first gradient storage unit, to clear the first gradient storage unit. Because the first gradient storage unit is associated with the first index storage unit (which indicates that the first gradient storage address of the first gradient storage unit is stored in the first index storage unit), after the server clears the first gradient storage unit, the server further resets the first index storage unit. For example, the server deletes the index storage address stored in the first index storage unit, and resets the status information stored in the first index storage unit to initial state information.

In an optional embodiment, after the server adjusts the parameter value of the first model parameter based on the average gradient value corresponding to the first identifier, the server stores an adjusted parameter value of the first model parameter in the first parameter storage unit. For example, the server first determines the first parameter storage unit based on the first identifier, and then stores the adjusted parameter value of the first model parameter in the first parameter storage unit. Specifically, the server deletes the parameter value stored in the first parameter storage unit, and then stores the adjusted parameter value of the first model parameter in the first parameter storage unit.

The accumulated gradient value stored in the first gradient storage unit in S605 may be the first accumulated gradient value, or may be an accumulated gradient value obtained by accumulating, based on the first accumulated gradient value, another gradient value corresponding to the first model parameter. The accumulated gradient value that is stored in the first gradient storage unit and that is used by the server to adjust the parameter value of the first model parameter is an accumulated gradient value obtained by accumulating gradient values of model parameters corresponding to sample features with a same sample feature identifier. The server may determine a quantity of sample features with the same sample feature identifier based on all obtained sample features, and determine, based on the quantity of sample features, a total accumulation count of the gradient value corresponding to the first model parameter. To be specific, when the server determines that the accumulation count in the first gradient storage unit reaches the total accumulation count, the gradient values of the model parameters corresponding to the sample features with the same sample feature identifier are all accumulated. This is not limited in embodiments of this application.

In this embodiment of this application, training of the first model parameter of the recommendation model is used as an example for description. The recommendation model may include a plurality of model parameters, and the plurality of model parameters correspond to different sample feature identifiers. The server may train each model parameter based on a sample feature indicated by a sample feature identifier corresponding to the model parameter. For a process of training each of the plurality of model parameters, refer to the process of training the first model parameter. Details are not described herein again in embodiments of this application. In addition, the server may include a parameter management module and a plurality of execution modules. S601 may be performed by the execution module, and S602 to S605 may be performed by the parameter management module. For example, after the execution module determines the first gradient value corresponding to the first model parameter, the execution module first stores the first gradient value in cache space of the execution module, and then sequentially sends, to the parameter management module, gradient values stored in the cache space. When sending each gradient value to the parameter management module, the execution module may further send, to the parameter management module, a sample feature identifier corresponding to the gradient value (namely, a sample feature identifier corresponding to a model parameter corresponding to the gradient value). For example, the execution module sends both the first identifier and the first gradient value to the parameter management module.

In conclusion, according to the technical solutions provided in embodiments of this application, the mapping relationship is the mapping relationship between the sample feature identifier and the gradient storage address, and the mapping relationship includes the mapping relationship between the first identifier and the first gradient storage address. Therefore, after the server determines, based on the loss value of the first prediction data and the initial value of the first model parameter, the first gradient value corresponding to the first model parameter, the server may quickly determine the first gradient storage address based on the first identifier (the identifier of the first sample feature herein) and the mapping relationship, and further accumulate the first gradient value corresponding to the first model parameter to the accumulated gradient value stored in the first gradient storage address. When the server trains the recommendation model, the server may quickly determine the first gradient storage address based on the first identifier and the mapping relationship, to obtain the accumulated gradient value stored in the first gradient storage address, and adjust the parameter value of the first model parameter based on the accumulated gradient value stored in the first gradient storage address. In this way, data processing efficiency in a model training process can be improved, and model training efficiency can be further improved. In addition, because the accumulated gradient value corresponding to the first model parameter instead of the plurality of gradient values corresponding to the first model parameter is stored in the first gradient storage address, the server does not need to accumulate gradient values when training the recommendation model. This further improves data processing efficiency and model training efficiency in the model training process.

The foregoing describes the method embodiment of this application. The following describes apparatus embodiments of this application. The apparatuses in this application are configured to perform the method in this application. For details that are not disclosed in the apparatus embodiments, refer to the method embodiment.

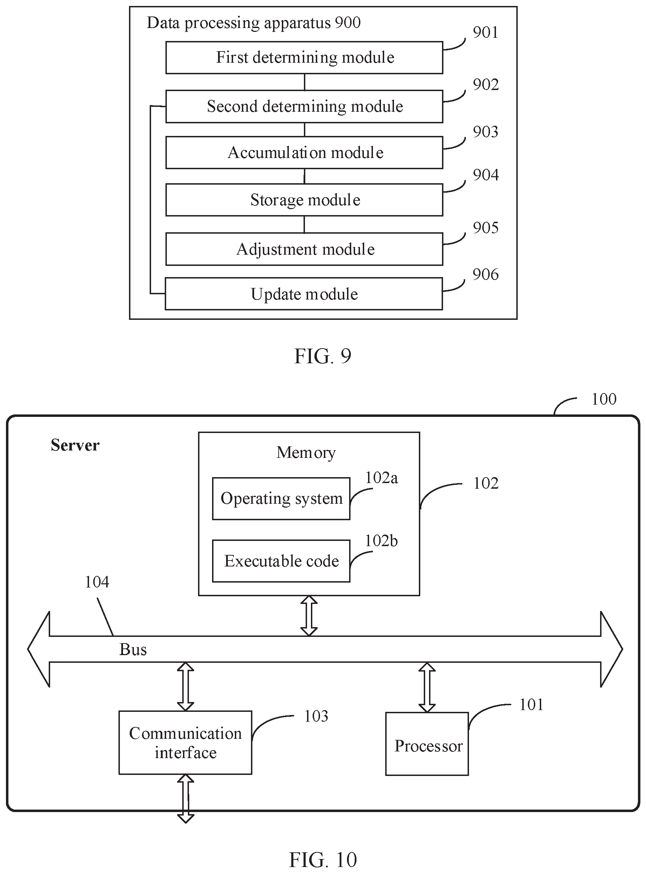

Refer to FIG. 9. FIG. 9 is a diagram of a data processing apparatus 900 according to an embodiment of this application. The data processing apparatus 900 may be a server or a functional component in the server. The data processing apparatus 900 may implement all or a part of the steps in the data processing method provided in the embodiment shown in FIG. 6. As shown in FIG. 9, the data processing apparatus 900 includes a first determining module 901, a second determining module 902, an accumulation module 903, a storage module 904, and an adjustment module 905.

The first determining module 901 is configured to determine, based on a loss value of first prediction data and an initial value of a first model parameter of a recommendation model, a first gradient value corresponding to the first model parameter, where the first prediction data is calculated by the recommendation model based on a first user feature and a first content feature, an identifier of a first sample feature in the first user feature and the first content feature is a first identifier, and the first model parameter corresponds to the first identifier. For an implementation process of the first determining module 901, refer to related descriptions in step S601.

The second determining module 902 is configured to determine a first gradient storage address based on the first identifier and a mapping relationship, where the mapping relationship includes a mapping relationship between the first identifier and the first gradient storage address, the first gradient storage address indicates a first gradient storage unit, and the first gradient storage unit is configured to store an accumulated gradient value corresponding to the first model parameter. For an implementation process of the second determining module 902, refer to related descriptions in step S602.

The accumulation module 903 is configured to accumulate the first gradient value and the accumulated gradient value that is stored in the first gradient storage unit, to obtain a first accumulated gradient value. For an implementation process of the accumulation module 903, refer to related descriptions in step S603.

The storage module 904 is configured to store the first accumulated gradient value in the first gradient storage unit. For an implementation process of the storage module 904, refer to related descriptions in step S604.

The adjustment module 905 is configured to adjust a parameter value of the first model parameter based on an accumulated gradient value stored in the first gradient storage unit. For an implementation process of the adjustment module 905, refer to related descriptions in step S605.

Optionally, the second determining module 902 is configured to: determine a first index storage address based on the first identifier and a first mapping relationship, where the first mapping relationship includes a mapping relationship between the first identifier and the first index storage address, the first index storage address indicates a first index storage unit, and the first index storage unit is configured to store index information corresponding to the first identifier; and determine the first gradient storage address based on the index information stored in the first index storage unit.

Optionally, the second determining module 902 is configured to: when the index information stored in the first index storage unit includes a gradient storage address, determine, as the first gradient storage address, the gradient storage address stored in the first index storage unit; or when the index information stored in the first index storage unit does not include a gradient storage address, determine a first idle storage unit in pre-created first storage space as the first gradient storage unit, or create second storage space and determine a second idle storage unit in the second storage space as the first gradient storage unit; and determine an address of the first gradient storage unit as the first gradient storage address, where the first storage space and the second storage space each include at least one storage unit.

Optionally, the storage module 904 is further configured to store the first gradient storage address in the first index storage unit after the second determining module 902 determines that the index information stored in the first index storage unit does not include the gradient storage address, and determines the address of the first gradient storage unit as the first gradient storage address.

Optionally, the index information stored in the first index storage unit includes status information, the status information indicates that a storage status corresponding to the first identifier is an initial state or an accumulation state. The second determining module 902 is further configured to: when the status information indicates that the storage status corresponding to the first identifier is the initial state, determine that the index information stored in the first index storage unit does not include the gradient storage address; and when the status information indicates that the storage status corresponding to the first identifier is the accumulation state, determine that the index information stored in the first index storage unit includes the gradient storage address.

Optionally, the data processing apparatus 900 further includes an update module 906, configured to: when the status information indicates that the storage status corresponding to the first identifier is the initial state, update the status information after storing the first gradient storage address in the first index storage unit.

Optionally, the adjustment module 905 is configured to: determine, based on the accumulated gradient value stored in the first gradient storage unit, an average gradient value corresponding to the first identifier; and adjust the parameter value of the first model parameter based on the average gradient value corresponding to the first identifier.

Optionally, both the first user feature and the first content feature are vectors.

Optionally, the data processing apparatus 900 may be a server or a functional component in the server. The data processing apparatus 900 includes a parameter management module and a plurality of execution modules. The first determining module 901 may be a submodule in the execution module, and the second determining module 902, the accumulation module 903, the storage module 904, the adjustment module 905, and the update module 906 each may be a submodule in the parameter management module.

In conclusion, according to the technical solutions provided in embodiments of this application, the mapping relationship is the mapping relationship between the sample feature identifier and the gradient storage address, and the mapping relationship includes the mapping relationship between the first identifier and the first gradient storage address. Therefore, after the first determining module determines, based on the loss value of the first prediction data and the initial value of the first model parameter, the first gradient value corresponding to the first model parameter, the second determining module may quickly determine the first gradient storage address based on the first identifier (the identifier of the first sample feature herein) and the mapping relationship, and further the storage module accumulates the first gradient value corresponding to the first model parameter to the accumulated gradient value stored in the first gradient storage address. When the server trains the recommendation model, the second determining module in the server may quickly determine the first gradient storage address based on the first identifier and the mapping relationship, to obtain the accumulated gradient value stored in the first gradient storage address, and the adjustment module adjusts the parameter value of the first model parameter based on the accumulated gradient value stored in the first gradient storage address. In this way, data processing efficiency in a model training process can be improved, and model training efficiency can be further improved. In addition, because the accumulated gradient value corresponding to the first model parameter instead of the plurality of gradient values corresponding to the first model parameter is stored in the first gradient storage address, the server does not need to accumulate gradient values when training the recommendation model. This further improves data processing efficiency and model training efficiency in the model training process.

An embodiment of this application provides a data processing apparatus, including a memory and a processor. The memory is configured to store a computer program. The processor is configured to execute the computer program stored in the memory, to enable the data processing apparatus to perform a part or all of functions in the data processing method provided in embodiments of this application. The data processing apparatus may be a server or a part of functional components in the server.

In this embodiment of this application, an example in which the data processing apparatus is a server is used for description. For example, FIG. 10 is a diagram of a structure of a server 100 according to an embodiment of this application. As shown in FIG. 10, the server 100 includes a processor 101, a memory 102, a communication interface 103, and a bus 104. The processor 101, the memory 102, and the communication interface 103 are communicatively connected to each other through the bus 104.

The processor 101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU) or a multi-core processor (multi-CPU). The dedicated hardware chip is a hardware module for high-performance processing. The dedicated hardware chip includes at least one of a digital signal processor, an application-specific integrated circuit (application-specific integrated circuit, ASIC), a field-programmable gate array (field-programmable gate array, FPGA), or a network processor (network processor, NP). The processor 101 may alternatively be an integrated circuit chip and has a signal processing capability. In an implementation process, a part or all of functions of the data processing method in this application may be implemented by using an integrated logic circuit of hardware in the processor 101 or instructions in a form of software.

The memory 102 is configured to store a computer program, and the computer program includes an operating system 102a and executable code (namely, program instructions) 102b. For example, the memory 102 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer, but is not limited thereto. For example, the memory 102 is configured to store an egress port queue, and the like. For example, the memory 102 exists independently, and is connected to the processor 101 through the bus 104. Alternatively, the memory 102 and the processor 101 are integrated together. The memory 102 may store executable code. When the executable code stored in the memory 102 is executed by the processor 101, the processor 101 is configured to perform a part or all of functions of the data processing method provided in embodiments of this application. For an implementation of performing the process by the processor 101, refer to related descriptions in the foregoing embodiments. The memory 102 may further include a software module, data, and the like that are required for another running process like an operating system.

The communication interface 103 uses a transceiver module such as, but not limited to a transceiver, to implement communication with another device or a communication network. For example, the communication interface 103 may be any one or any combination of the following components with a network access function: a network interface (for example, an Ethernet interface), a wireless network interface card, and the like.

The bus 104 is any type of communication bus configured to implement an interconnection between internal components (such as the memory 102, the processor 101, and the communication interface 103) in the server, for example, a system bus. In this embodiment of this application, an example in which the foregoing components in the server are interconnected through the bus 104 is used for description. Optionally, the foregoing components in the server 100 may be communicatively connected to each other in another connection manner other than through the bus 104. For example, the foregoing components in the server 100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. Specific implementations of the foregoing components are not limited in embodiments of this application. Descriptions of procedures corresponding to the foregoing accompanying drawings have respective focuses. For a part that is not described in detail in a procedure, refer to related descriptions of other procedures.

All or a part of the foregoing embodiments may be implemented by using software, hardware, firmware or any combination thereof. When software is used for implementation, all or a part of embodiments may be implemented in a form of a computer program product. A computer program product that provides a program development platform includes one or more computer instructions. When the computer program instructions are loaded and executed on the server, all or a part of the functions of the data processing method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application provides a compute device cluster, including at least one compute device. Each of the at least one compute device includes a processor and a memory. The processor in the at least one compute device is configured to execute instructions stored in the memory in the at least one compute device, to enable the compute device cluster to perform a part or all of functions of the data processing method provided in embodiments of this application.

Optionally, the compute device is a server, and the compute device cluster is a server cluster. In other words, an embodiment of this application provides a server cluster. The server cluster includes at least one server, each of the at least one server includes a processor and a memory, and the processor in the at least one server is configured to execute instructions stored in the memory in the at least one server, to enable the server cluster to perform a part or all of functions of the data processing method provided in embodiments of this application.

Optionally, for a structure of the at least one server included in the server cluster, refer to a server 100 shown in FIG. 10. A memory 102 in one or more servers 100 in the server cluster may store same instructions used for performing the data processing method.

In some possible implementations, the memory 102 in the one or more server 100 in the server cluster may alternatively separately store a part of the instructions for performing the data processing method. In other words, a combination of the one or more server 100 may jointly execute the instructions used for performing the data processing method.

It should be noted that memories 102 in different servers 100 in the server cluster may store different instructions that are respectively used for performing a part of functions of the data processing method. In other words, the instructions stored in the memories 102 in the different servers 100 may implement functions of one or more of the first determining module 901, the second determining module 902, the accumulation module 903, the storage module 904, the adjustment module 905, and the update module 906 shown in FIG. 9.

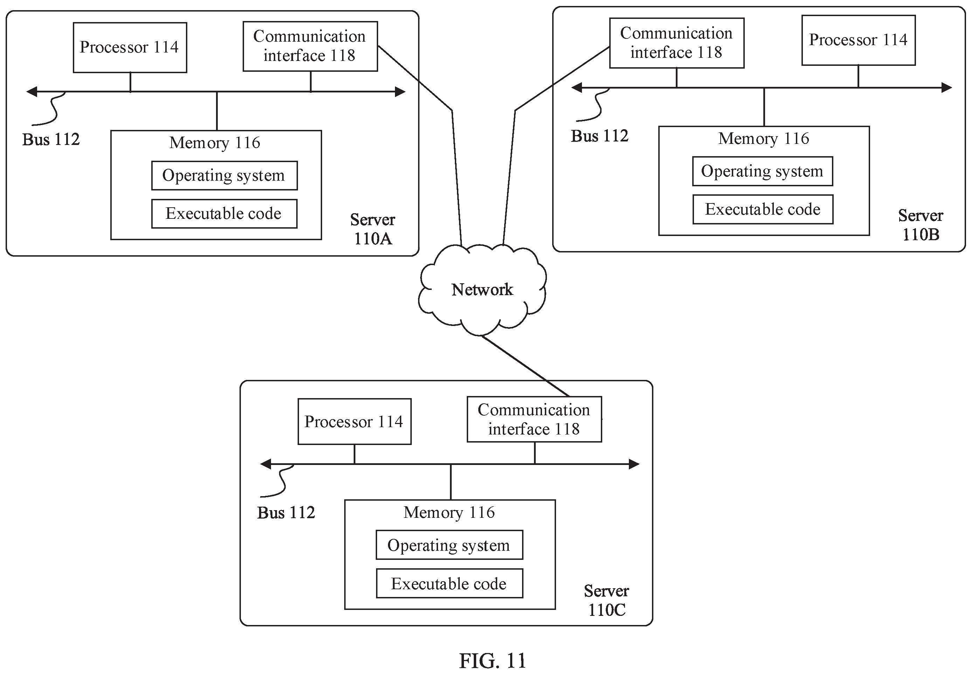

In some possible implementations, the one or more servers in the server cluster may be connected through a network. The network may be a wide area network, a local area network, or the like. FIG. 11 shows a possible implementation. As shown in FIG. 11, a plurality of servers 110A, 110B, and 110C are connected through a network. Specifically, each server is connected to the network through a communication interface in the server. In this possible implementation, the servers 110A, 110B, and 110C each include a bus 112, a processor 114, a memory 116, and a communication interface 118. The memory 116 in the server 110A stores instructions used for performing a function of the processor. In addition, the memory 116 in the server 110B stores instructions used for performing a function of the processor. The memory 116 in the server 110C stores instructions used for performing a function of the processor.

It should be understood that a function of the server 110A shown in FIG. 11 may alternatively be completed by a plurality of servers 110. Similarly, a function of the server 110B may also be completed by a plurality of servers 110. A function of the server 110C may also be completed by a plurality of servers 110. In addition, a deployment manner of the modules configured to implement the data processing method in the server may alternatively be adjusted based on an application requirement.

Based on a same inventive concept, an embodiment of this application provides a computer-readable storage medium. The computer-readable storage medium stores a computer program. When the computer program is executed (for example, executed by a server, a server cluster, a data processing apparatus, one or more processors, or the like), all or a part of the steps in the data processing method provided in the foregoing method embodiment are implemented.

Based on a same inventive concept, an embodiment of this application provides a computer program product. The computer program product includes a program or code. When the program or the code is executed (for example, executed by a server, a server cluster, a data processing apparatus, one or more processors, or the like), all or a part of the steps in the data processing method provided in the foregoing method embodiment are implemented.

All or a part of the foregoing embodiments may be implemented by using software, hardware, firmware or any combination thereof. When software is used for implementation, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "a plurality of" means two or more. In this application, unless otherwise specified, the symbol "/" usually represents "or". For example, A/B represents A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, the words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiment and the apparatus embodiments provided in embodiments of this application may be mutually referenced. A sequence of the operations in the method embodiment can be properly adjusted, and the operations can be correspondingly added or deleted based on a situation. Any variation method that can be easily figured out by a person skilled in the art within the technical scope disclosed in this application shall fall within the protection scope of this application. Therefore, details are not described again.

In corresponding embodiments provided in this application, it should be understood that the disclosed apparatuses and the like may be implemented in other composition manners. For example, the apparatus embodiments described above are merely examples. For example, division into the modules is merely logical function division and there may be other division manners during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms. The modules described as separate parts may or may not be physically separate, and parts described as modules may or may not be physical modules, may be located in one position, or may be distributed on a plurality of network nodes. A part or all of the modules may be selected based on an actual requirement to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
determining, based on a loss value of first prediction data and an initial value of a first model parameter of a recommendation model, a first gradient value corresponding to the first model parameter, wherein the first prediction data is calculated by the recommendation model based on a first user feature and a first content feature, an identifier of a first sample feature in the first user feature and the first content feature is a first identifier, and the first model parameter corresponds to the first identifier;
determining a first gradient storage address based on the first identifier and a mapping relationship, wherein the mapping relationship comprises a mapping relationship between the first identifier and the first gradient storage address, the first gradient storage address indicates a first gradient storage unit, and the first gradient storage unit is configured to store an accumulated gradient value corresponding to the first model parameter;
accumulating the first gradient value and the accumulated gradient value that is stored in the first gradient storage unit, to obtain a first accumulated gradient value;
storing the first accumulated gradient value in the first gradient storage unit; and
adjusting a parameter value of the first model parameter based on an accumulated gradient value stored in the first gradient storage unit.

2. The method according to claim 1, wherein
determining the first gradient storage address based on the first identifier and the mapping relationship comprises:
determining a first index storage address based on the first identifier and a first mapping relationship, wherein the first mapping relationship comprises a mapping relationship between the first identifier and the first index storage address, the first index storage address indicates a first index storage unit, and the first index storage unit is configured to store index information corresponding to the first identifier; and
determining the first gradient storage address based on the index information stored in the first index storage unit.

3. The method according to claim 2, wherein
determining the first gradient storage address based on the index information stored in the first index storage unit comprises:
when the index information stored in the first index storage unit comprises a gradient storage address, determining, as the first gradient storage address, the gradient storage address stored in the first index storage unit; and
when the index information stored in the first index storage unit does not comprise a gradient storage address, determining a first idle storage unit in pre-created first storage space as the first gradient storage unit, or creating second storage space and determining a second idle storage unit in the second storage space as the first gradient storage unit; and determining an address of the first gradient storage unit as the first gradient storage address, wherein the first storage space and the second storage space each comprise at least one storage unit.

4. The method according to claim 3, wherein the method further comprises:
storing the first gradient storage address in the first index storage unit after the index information stored in the first index storage unit does not comprise the gradient storage address and the address of the first gradient storage unit is determined as the first gradient storage address.

5. The method according to claim 4, wherein the index information stored in the first index storage unit comprises status information, the status information indicates that a storage status corresponding to the first identifier is an initial state or an accumulation state, and the method further comprises:
when the status information indicates that the storage status corresponding to the first identifier is the initial state, determining that the index information stored in the first index storage unit does not comprise the gradient storage address; and
when the status information indicates that the storage status corresponding to the first identifier is the accumulation state, determining that the index information stored in the first index storage unit comprises the gradient storage address.

6. The method according to claim 5, wherein the method further comprises:
when the status information indicates that the storage status corresponding to the first identifier is the initial state, updating the status information after storing the first gradient storage address in the first index storage unit.

7. The method according to any one of claims 1 to 6, wherein
adjusting the parameter value of the first model parameter based on the accumulated gradient value stored in the first gradient storage unit comprises:
determining, based on the accumulated gradient value stored in the first gradient storage unit, an average gradient value corresponding to the first identifier; and
adjusting the parameter value of the first model parameter based on the average gradient value corresponding to the first identifier.

8. The method according to any one of claims 1 to 7, wherein
both the first user feature and the first content feature are vectors.

9. A data processing apparatus, wherein the apparatus comprises:
a first determining module, configured to determine, based on a loss value of first prediction data and an initial value of a first model parameter of a recommendation model, a first gradient value corresponding to the first model parameter, wherein the first prediction data is calculated by the recommendation model based on a first user feature and a first content feature, an identifier of a first sample feature in the first user feature and the first content feature is a first identifier, and the first model parameter corresponds to the first identifier;
a second determining module, configured to determine a first gradient storage address based on the first identifier and a mapping relationship, wherein the mapping relationship comprises a mapping relationship between the first identifier and the first gradient storage address, the first gradient storage address indicates a first gradient storage unit, and the first gradient storage unit is configured to store an accumulated gradient value corresponding to the first model parameter;
an accumulation module, configured to accumulate the first gradient value and the accumulated gradient value that is stored in the first gradient storage unit, to obtain a first accumulated gradient value;
a storage module, configured to store the first accumulated gradient value in the first gradient storage unit; and
an adjustment module, configured to adjust a parameter value of the first model parameter based on an accumulated gradient value stored in the first gradient storage unit.

10. The apparatus according to claim 9, wherein the second determining module is configured to:
determine a first index storage address based on the first identifier and a first mapping relationship, wherein the first mapping relationship comprises a mapping relationship between the first identifier and the first index storage address, the first index storage address indicates a first index storage unit, and the first index storage unit is configured to store index information corresponding to the first identifier; and
determine the first gradient storage address based on the index information stored in the first index storage unit.

11. The apparatus according to claim 10, wherein the second determining module is configured to:
when the index information stored in the first index storage unit comprises a gradient storage address, determine, as the first gradient storage address, the gradient storage address stored in the first index storage unit; or
when the index information stored in the first index storage unit does not comprise a gradient storage address, determine a first idle storage unit in pre-created first storage space as the first gradient storage unit, or create second storage space and determine a second idle storage unit in the second storage space as the first gradient storage unit; and determine an address of the first gradient storage unit as the first gradient storage address, wherein the first storage space and the second storage space each comprise at least one storage unit.

12. The apparatus according to claim 11, wherein the storage module is further configured to: store the first gradient storage address in the first index storage unit after the second determining module determines that the index information stored in the first index storage unit does not comprise the gradient storage address, and determines the address of the first gradient storage unit as the first gradient storage address.

13. The apparatus according to claim 12, wherein the index information stored in the first index storage unit comprises status information, the status information indicates that a storage status corresponding to the first identifier is an initial state or an accumulation state, and
the second determining module is further configured to:
when the status information indicates that the storage status corresponding to the first identifier is the initial state, determine that the index information stored in the first index storage unit does not comprise the gradient storage address; and
when the status information indicates that the storage status corresponding to the first identifier is the accumulation state, determine that the index information stored in the first index storage unit comprises the gradient storage address.

14. The apparatus according to claim 13, wherein the apparatus further comprises:
an update module, configured to: when the status information indicates that the storage status corresponding to the first identifier is the initial state, update the status information after storing the first gradient storage address in the first index storage unit.

15. The apparatus according to any one of claims 9 to 14, wherein the adjustment module is configured to:
determine, based on the accumulated gradient value stored in the first gradient storage unit, an average gradient value corresponding to the first identifier; and
adjust the parameter value of the first model parameter based on the average gradient value corresponding to the first identifier.

16. The apparatus according to any one of claims 9 to 15, wherein
both the first user feature and the first content feature are vectors.

17. A data processing apparatus, comprising a memory and a processor, wherein
the memory is configured to store a computer program; and
the processor is configured to execute the computer program stored in the memory, to enable the data processing apparatus to perform the method according to any one of claims 1 to 8.

18. A computer-readable storage medium, wherein the computer-readable storage medium stores a computer program, and when the computer program is executed, the method according to any one of claims 1 to 8 is implemented.

19. A computer program product, wherein the computer program product comprises a program or code, and when the program or the code is executed, the method according to any one of claims 1 to 8 is implemented.
